# EUROPÄISCHE PATENTANMELDUNG

(11) **EP 2 679 929 A1**
(43) Veröffentlichungstag der Anmeldung: **01.01.2014**
(21) Anmeldenummer: 12004778.2
(22) Anmeldetag: 26.06.2012
(51) Int. Cl.: F24J 2/52, F24J 2/46

(54) **Montage- und Dichtsystem zum Einbau einer Mehrzahl plattenförmiger Module in ein Schrägdach**

(71) Anmelder: Centrosolar AG, 22769 Hamburg (DE)
(72) Erfinder: Kleibohm, Philip, 33102 Paderborn (DE); Meyer, Thomas, 33100 Paderborn (DE); Castrichini, Yann, 01800 Perouges (FR); Burghoff, Günter, 26209 Hatten (DE)
(74) Vertreter: Graf von Stosch, Andreas

(57) **Zusammenfassung**

Die vorliegende Erfindung betrifft ein Montage- und Dichtsystem zum Einbau einer Mehrzahl plattenförmiger Module (M1, M2) in ein Schrägdach, umfassend wenigstens einen Halter (10) mit einem ersten Aufnahmeabschnitt (12) zur Aufnahme eines Abschnitts eines traufenseitigen Randes eines ersten Moduls (M1) und mit einem zweiten Aufnahmeabschnitt (14) zur Aufnahme eines Abschnitts eines firstseitigen Randes eines zweiten Moduls (M2). Das Montage- und Dichtsystem umfasst ferner ein Dichtlippenprofil (20) mit einem Kopplungsabschnitt (22) zur Kopplung des Dichtlippenprofils (20) mit dem firstseitigen Rand des zweiten Moduls (M2), mit einer Dichtlippe (24), deren Hauptlängserstreckungsrichtung - im bestimmungsgemäß montierten Zustand des Systems - im Wesentlichen horizontal verläuft, wobei ein unteres Ende der Dichtlippe (24) mit dem Kopplungsabschnitt (22) verbunden ist und ein freies oberes Ende (25) der Unterseite des ersten Moduls (M1) zugewandt ist, und mit einer zumindest abschnittsweise von der Dichtlippe (24) begrenzten Rinne (26) zum Sammeln und Ableiten von Kondenswasser, das sich - im bestimmungsgemäß montierten Zustand des Systems - an der Unterseite des ersten Moduls (M1) gebildet hat. Die Dichtlippe (24) weist wenigstens eine Aussparung auf, die derart angeordnet ist, dass in der Rinne (26) gesammeltes Kondenswasser - im bestimmungsgemäß montierten Zustand des Systems - auf die Oberseite des zweiten Moduls (M2) abgeleitet wird.

## Beschreibung

Die vorliegende Erfindung betrifft ein Montage- und Dichtsystem zum Einbau einer Mehrzahl plattenförmiger Module in ein Schrägdach, umfassend wenigstens einen Halter mit einem ersten Aufnahmeabschnitt zur Aufnahme eines Abschnitts eines traufenseitigen Randes eines ersten Moduls und mit einem zweiten Aufnahmeabschnitt zur Aufnahme eines Abschnitts eines firstseitigen Randes eines zweiten Moduls. Das Montage- und Dichtsystem umfasst ferner ein Dichtlippenprofil mit einem Kopplungsabschnitt zur Kopplung des Dichtlippenprofils mit dem firstseitigen Rand des zweiten Moduls, mit einer Dichtlippe, deren Hauptlängserstreckungsrichtung - im bestimmungsgemäß montierten Zustand des Systems - im Wesentlichen horizontal verläuft, wobei ein unteres Ende der Dichtlippe mit dem Kopplungsabschnitt verbunden ist und ein freies oberes Ende der Unterseite des ersten Moduls zugewandt ist, und mit einer zumindest abschnittsweise von der Dichtlippe begrenzten Rinne zum Sammeln und Ableiten von Kondenswasser, das sich - im bestimmungsgemäß montierten Zustand des Systems - an der Unterseite des ersten Moduls gebildet hat.

Bei den plattenförmigen Modulen, die in der Regel rechteckig bzw. quaderförmig ausgebildet sind, kann es sich insbesondere um Photovoltaikmodule oder um Sonnenkollektormodule zur Gewinnung von Warmwasser handeln. Prinzipiell können die plattenförmigen Module jedoch auch anders ausgebildet sein, beispielsweise als einfache Abdeckungen ohne eine weitere Funktion, zum Beispiel aus Metallblech, Glas oder transparentem Kunststoff.

Das oben beschriebene, gattungsgemäße Montage- und Dichtsystem - im Folgenden einfach als "System" bezeichnet - wird verwendet, um plattenförmige Module nicht lediglich zusätzlich oben auf eine bereits vorhandene, intakte Dachhaut eines Schrägdachs aufzusetzen, sondern um vielmehr zumindest einen Teil der Dachhaut selbst aus den plattenförmigen Modulen zu bilden. Dies bietet einerseits die Möglichkeit einer relativ unauffälligen und damit ästhetisch ansprechenden Art der Anbringung der plattenförmigen Module und reduziert andererseits die Kosten bei einer Dachneukonstruktion oder bei einer Dachrenovierung, da an Material für die Dacheindeckung gespart werden kann.

Da die plattenförmigen Module selbst zumindest einen Teil der Dachhaut bilden, ist darauf zu achten, dass sie regendicht miteinander verbunden sind. Mit "regendicht verbunden" ist dabei nicht gemeint, dass eine hermetisch dichte Verbindung zwischen den Modulen bestehen muss, sondern vielmehr, dass die Verbindung derart ausgestaltet ist, dass allenfalls eine sehr geringe Menge an Feuchtigkeit durch die Dachhaut hindurch gelangen kann. Gelangt zuviel Feuchtigkeit durch die Dachhaut, kann dies zu ernsthaften Schäden an der Dachunterkonstruktion oder an anderen Gebäudeteilen führen. Umgekehrt ist eine hermetische Abdichtung in der Regel ebenfalls nicht wünschenswert, da eine gewisse Durchlüftung der Dachhaut vorteilhaft ist, wie nachfolgend noch näher ausgeführt wird.

Die Problematik der regendichten Verbindung betrifft insbesondere den Übergangsbereich zweier in vertikaler Richtung unmittelbar benachbarter Module. Häufig werden diese - ähnlich wie Dachziegel - derart relativ zueinander montiert, dass ein unterer bzw. traufenseitiger Randabschnitt des oberen Moduls einen oberen bzw. firstseitigen Randabschnitt des unteren Moduls überlappt.

Ein gattungsgemäßes Montage- und Dichtsystem ist aus der EP 2 196 594 A1 bekannt. Bei dieser konkreten Ausführungsform wird die regendichte Verbindung im Übergangsbereich zweier in vertikaler Richtung unmittelbar benachbarter Module insbesondere durch spezielle Rahmenelemente erzielt, die am oberen bzw. unteren Rand der beiden Module befestigt sind. Die Rahmenelemente sind als metallische Strangpressprofile ausgebildet und weisen eine relativ komplexe Querschnittform auf. Die Rahmenelemente sind ferner derart ausgebildet, dass die mit den Rahmenelementen versehenen Module von oben, d.h. vom First des Schrägdachs ausgehend, nach unten, d.h. zur Traufe des Schrägdachs hin, nacheinander verlegt werden können. Dies ist für den Monteur für gewöhnlich merklich einfacher als die umgekehrte Reihenfolge, d.h. ein Verlegen von unten nach oben.

Ein bekanntes Problem bei in der Dachhaut integrierten plattenförmigen Modulen besteht darin, dass sich an der Unterseite der Module Kondenswasser bilden kann, welches - sofern es nicht in geeigneter Weise abgeführt wird - auf die in der Regel hölzerne Dachunterkonstruktion tropft, wo es mit der Zeit ernsthafte Schäden verursachen kann, zum Beispiel durch Fäulnis. Um dies zu vermeiden, umfassen die in der EP 2 196 594 A1 offenbarten Rahmenelemente Rinnen, die das Kondenswasser auffangen und zu den seitlichen Rändern der entsprechenden Rahmenelemente hin ableiten, von wo es über eine in der Dachkonstruktion vorgesehene Drainageleitung bzw. -rinne weiter abgeführt wird.

Neben den zuvor erwähnten, vorteilhaften Eigenschaften des in der EP 2 196 594 A1 beschriebenen Systems weist dieses jedoch auch eine Reihe von Nachteilen auf. Insbesondere erfordert dieses System den Einbau von Drainageleitungen in das Schrägdach zum weiteren Ableiten des in der Rinne gesammelten Kondenswassers. Das Vorsehen solcher Drainageleitungen macht die Herstellung und Montage des Systems relativ aufwändig und damit kostspielig.

Hinzu kommt, dass sich bei diesem System die unteren und oberen metallischen Rahmenelemente, die komplexe, die Rinnen umfassende Querschnittsformen aufweisen, über die gesamte Länge des unteren bzw. oberen Randes des Moduls erstrecken müssen. Die Material- und Fertigungskosten für diese Rahmenelemente haben auf den Gesamtpreis des Systems einen nicht unbedeutenden Einfluss. Darüber hinaus müssen die mit den Rahmenelementen versehenen plattenförmigen Module auf das Schrägdach verbracht und dort von einem Monteur befestigt werden. Die verhältnismäßig großen Rahmenelemente tragen selbst dann, wenn sie aus einem relativ leichten Metall, wie bspw. Aluminium, gefertigt sind, erheblich zu dem Gewicht des plattenförmigen Moduls bei, was die Montagearbeiten erschwert. Weiterhin erfordert das Verbinden zweier in vertikaler Richtung benachbarter plattenförmiger Module bei dem System der EP 2 196 594 A1 von dem Monteur die Ausführung einer komplizierten Bewegung aus Verschieben und Verschwenken der beiden Module relativ zueinander. Hierbei kann es geschehen, dass es bei den relativ dünn ausgebildeten Dichtlippen, die eine berührungsfreie Labyrinthdichtung bilden sollen, zu Beschädigungen kommt, insbesondere dann, wenn die Module beim Verschwenken miteinander verkanten.

Ein weiterer Nachteil des in der EP 2 196 594 A1 beschriebenen Systems besteht darin, dass Module, z.B. wenn sie durch Hagel beschädigt sind, in der Regel nicht einzeln ausgewechselt werden können, d.h. ohne die traufenseitig davon angeordneten Module zuvor ebenfalls zu demontieren.

Es ist daher Aufgabe der vorliegenden Erfindung, ein Montage- und Dichtsystem zum Einbau einer Mehrzahl plattenförmiger Module in ein Schrägdach bereitzustellen, welches auf der einen Seite die zuvor erwähnten Vorteile des in der EP 2 196 594 A1 offenbarten Systems aufweist, auf der anderen Seite jedoch dessen Nachteile vermeidet. Insbesondere ist es Aufgabe der vorliegenden Erfindung, ein Montage- und Dichtsystem bereitzustellen, welches geeignet ist, an der Unterseite eines plattenförmigen Moduls entstandenes Kondenswasser auf einfachere Weise zuverlässig abzuleiten.

Diese Aufgabe wird erfindungsgemäß durch das eingangs genannte Montage- und Dichtsystem gelöst, bei welchem die Dichtlippe wenigstens eine Aussparung aufweist, die derart angeordnet ist, dass in der Rinne gesammeltes Kondenswasser - im bestimmungsgemäß montierten Zustand des Systems - auf die Oberseite des zweiten Moduls abgeleitet wird.

Indem die Dichtlippe wenigstens eine geeignete Aussparung aufweist, kann auf konstruktiv sehr einfache und damit kostengünstige Weise auf das Vorsehen von Drainageleitungen in der Dachkonstruktion verzichtet und zugleich das an der Unterseite eines Moduls gebildete Kondenswasser dennoch zuverlässig abgeführt werden. Dies reduziert die für die implementierung eines solchen Systems benötigte Anzahl an Einzelteilen und erleichtert den benötigten Montageaufwand. Die Dichtlippe ist im Bezug auf den Kopplungsabschnitt des Dichtlippenprofils vorzugsweise derart angeordnet, dass sie sich - im bestimmungsgemäß montierten Zustand des Systems - im Wesentlichen über dem zweiten plattenförmigen Modul, d.h. über dessen Oberseite, befindet. Somit kann das in der Rinne gesammelte Kondenswasser durch die wenigstens eine Aussparung der Dichtlippe auf die Oberseite des zweiten Moduls abgeleitet werden.

Mit der Formulierung "im bestimmungsgemäß montierten Zustand des Systems" ist ein Zustand gemeint, bei welchem das Montage- und Dichtsystem gemäß seiner Einsatzbestimmung auf der Unterkonstruktion eines Schrägdachs montiert ist, und die von diesem System gehaltenen plattenförmigen Module einen Teil der Außenhaut des Schrägdachs bilden.

Um auch dann, wenn sich - aufgrund entsprechender Witterungsverhältnisse - innerhalb kurzer Zeit relativ viel Kondenswasser an der Unterseite der plattenförmigen Module bildet, das Kondenswasser zügig und zuverlässig ableiten zu können, wird vorgeschlagen, dass die Dichtlippe eine Mehrzahl von Aussparungen, d.h. wenigstens zwei Aussparungen, umfassen kann. Vorzugsweise ist jeweils eine Aussparung an den beiden Längsenden der Dichtlippe in ihrer Hauptlängserstreckungsrichtung vorgesehen. Die Dichtlippe kann auch deutlich mehr als zwei Aussparungen umfassen, wobei die Aussparungen in diesem Fall vorzugsweise mit im Wesentlichen gleichen Abstand entlang der Längserstreckungsrichtung der Dichtlippe verteilt sind, damit das Kondenswasser leichter ablaufen kann. Die Aussparungen können im einfachsten Fall durch ein Fehlen eines sich über die gesamte Höhenrichtung der Dichtlippe erstreckenden Abschnitts der Dichtlippe an der entsprechenden Stelle erzielt werden. Alternativ ist es jedoch auch denkbar, dass die Dichtlippe an den entsprechenden Stellen Durchgangsbohrungen oder dergleichen aufweist, durch die das in der Rinne gesammelte Kondenswasser abgeführt werden kann. Um Material zu sparen, kann bereits bei der Herstellung der Dichtlippe darauf geachtet werden, dass die Stellen der Aussparungen frei von Material bleiben.

Um einerseits sicherzustellen, dass das gesamte an einer Unterseite eines plattenförmigen Moduls entstandene Kondenswasser zeitnah auf die Oberseite des benachbarten, darunter angeordneten plattenförmigen Moduls abgeleitet werden kann und es zu keinem Rückstau von Kondenswasser in der Rinne kommt, und um andererseits zu verhindern, dass durch die wenigstens eine Aussparung in der Dichtlippe eine unzulässige Menge von Spritzwasser unter die Dachhaut gelangen kann, bzw. dass eine zu große Menge an Luft unter die Dachhaut strömen kann, wird vorgeschlagen, dass die wenigstens eine Aussparung eine Abmessung in Hauptlängserstreckungsrichtung der Dichtlippe von 5 mm bis 20 mm, bevorzugt von 10 mm bis 15 mm, aufweist. Diese Dimensionen haben sich in praktischen Versuchen für handelsübliche Größen von Solarmodulen als besonders vorteilhaft erwiesen.

Sollte das Eindringen auch nur geringer Mengen an Schlagwasser und/oder Flugschnee unter die Dachhaut in besonderen Fällen inakzeptabel sein, so kann daran gedacht werden, an der wenigstens einen Aussparung der Dichtlippe ein Ventilelement, z.B. in Form eines nur nach außen aufschwenkbaren Vorhangelements, vorzusehen. Zusätzlich oder alternativ kann auch daran gedacht werden, hinter der Dichtlippe, zum Beispiel in der Rinne, noch eine weitere Dichtlippe vorzusehen, wobei die beiden Dichtlippen im Wesentlichen identisch ausgebildet sein können, mit der Ausnahme, dass ihre jeweiligen Aussparungen entlang der Hauptlängserstreckungsrichtung des Dichtlippenprofils versetzt zueinander angeordnet sind. Somit wird ein weiteres Eindringen von Schlagwasser und/oder Flugschnee, welches durch die wenigstens eine Aussparung in der vorderen Dichtlippe gelangt ist, von der weiter hinten angeordneten, zusätzlichen Dichtlippe verhindert.

Das Dichtlippenprofil erstreckt sich vorzugsweise im Wesentlichen über die gesamte Länge des firstseitigen Randes des entsprechend mit dem Dichtlippenprofil gekoppelten zweiten Moduls. "Im Wesentlichen" bedeutet in diesem Zusammenhang, dass sich das Dichtlippenprofil vorzugsweise über wenigstens 80%, stärker bevorzugt über wenigstens 90%, dieser Länge erstreckt. Der linke und der rechte Endabschnitt des firstseitigen Randes des zweiten Moduls können dabei - im bestimmungsgemäß montierten Zustand des Systems - frei von dem Dichtlippenprofil sein, um an diesen Stellen Platz für Verbindungselemente zu den in horizontaler Richtung benachbarten plattenförmigen Modulen zu lassen. Derartige Dichtelemente bzw. konstruktive Lösungen zum regendichten Verbinden von in horizontaler Richtung benachbarter Module sind im Stand der Technik hinreichend bekannt und werden daher hier nicht näher beschrieben.

Um auf einfache Weise eine effiziente, regendichte Verbindung zwischen zwei sich in vertikaler Richtung benachbarter plattenförmiger Module zu schaffen, wird ferner vorgeschlagen, dass das Dichtlippenprofil, und insbesondere die Dichtlippe selbst, einen elastischen Kunststoff umfasst, oder vorzugsweise überwiegend aus einem solchen gebildet ist. Als elastischer Kunststoff kommt bspw. Ethylen-Propylen-Dien-Kautschuk - auch bekannt als Ethylen-Propylen-Dien-Monomer bzw. EPDM - in Betracht. Hierbei handelt es sich um ein sehr witterungsbeständiges Material mit guten elastischen Eigenschaften. "Überwiegend" bedeutet in diesem Zusammenhang, dass vorzugsweise wenigstens 50 Vol% des Dichtlippenprofils aus einem elastischen Kunststoff gebildet sind. Gegenüber den metallischen Rahmenelementen, die in der EP 2 196 594 A1 offenbart sind, kann das Dichtlippenprofil gemäß der vorliegenden Erfindung somit leichter sein. Das Dichtlippenprofil kann auch mehrere Verschiedene Kunststoffe umfassen. Insbesondere kann die Dichtlippe aus einem anderen Material als das restliche Dichtlippenprofil gebildet sein. In diesem Fall kann die Dichtlippe an dem restlichen Dichtlippenprofil vorzugsweise angespritzt, aufgesteckt und/oder angeklebt werden.

Zur strukturellen Verstärkung des Dichtlippenprofils wird vorgeschlagen, dass dieses ferner ein Verstärkungselement umfasst, welches vorzugsweise im Wesentlichen vollständig von dem elastischen Kunststoff umgeben ist und eine höhere Festigkeit als dieses aufweist. Es sei angemerkt, dass das Verstärkungselement im Sinne der vorliegenden Erfindung auch dann im Wesentlichen vollständig von dem elastischen Kunststoff umgeben angesehen sein soll, wenn das Verstärkungselement an den stirnseitigen Längsenden des Dichtlippenprofils freiliegt, d.h. an diesen Stellen nicht von dem Kunststoff umgeben ist. Sofern das Verstärkungselement aus einem Metall gebildet ist, ist es von Vorteil, wenn das Verstärkungselement in dem flexiblen Kunststoff so eingebettet ist, dass das plattenförmige Modul in keinen direkten Kontakt mit dem Metall des Verstärkungselements gelangt.

Um eine zuverlässige Kopplung des Dichtlippenprofils, insbesondere von dessen Kopplungsabschnitt, mit dem firstseitigen Rand des unteren bzw. zweiten Moduls - im bestimmungsgemäß montierten Zustand des Systems - herstellen zu können, wird in Weiterbildung des vorherigen Gedankens vorgeschlagen, dass das Verstärkungselement so ausgebildet ist, dass es zur Kopplung des Dichtlippenprofils mit dem firstseitigen Rand des zweiten Moduls auf diesen Rand eine Klemmkraft auszuüben vermag. Beispielsweise kann das Verstärkungselement aus einem Metall bestehen und eine geometrische Form aufweisen, die dem Element gewisse federelastische Eigenschaften verleiht. So kann bspw. das Verstärkungselement im Querschnitt ein C-förmiges Profil aufweisen, welches aufgespreizt wird, wenn der firstseitige Rand des zweiten Moduls in den Kopplungsabschnitt des Dichtlippenprofils eingeführt wird. Weist das Verstärkungselement entsprechende federelastische Eigenschaften auf, ist es innerhalb gewisser Grenzen auch möglich, ohne das Dichtlippenprofil strukturell ändern zu müssen, plattenförmige Module unterschiedlicher Dicke mit dem Dichtlippenprofil zu koppeln. Zum Beispiel existieren verschiedene Arten von plattenförmigen Solarmodulen - etwa Module mit einer Folien-Rückseite und Glas-Glas-Module - die unterschiedliche Dicken aufweisen, bspw. im Bereich von 5 bis 7 mm. Derartige Variationen der Dicke, d.h. Variationen von einigen Millimetern, können durch die federelastischen Eigenschaften von einem entsprechend ausgebildeten Verstärkungselement kompensiert werden.

Ebenfalls zum Zwecke einer sicheren Kopplung des Dichtlippenprofils mit dem firstseitigen Rand des zweiten Moduls - im bestimmungsgemäß montierten Zustand des Systems - wird vorgeschlagen, dass der Kopplungsabschnitt des Dichtlippenprofils ausgebildet ist, den firstseitigen Rand des zweiten Moduls von drei Seiten zu umgeben. Wie zuvor bereits erwähnt, kann der firstseitige Rand an den jeweiligen Längsseiten jedoch frei von dem Dichtlippenprofil sein.

Um die Kopplung des Dichtlippenprofils mit dem firstseitigen Rand des unteren bzw. zweiten Moduls zu realisieren, kann alternativ oder zusätzlich zu einer Klemmverbindung auch daran gedacht werden, das Dichtlippenprofil an das Modul anzukleben bzw. anzuspritzen. Das Ankleben bzw. Anspritzen kann dabei wahlweise an einer, an zwei oder an drei Flächen des Moduls erfolgen.

Um ein hinreichendes Fassungsvermögen der Rinne des Dichtlippenprofils bereitzustellen, und um den Eintritt von Spritzwasser durch die wenigstens eine Aussparung im Dichtlippenprofil unter die Dachhaut zu minimieren, wird vorgeschlagen, dass die Rinne ferner von einem an den Kopplungsabschnitt angeformten Vorsprung begrenzt wird, dessen Hauptlängserstreckungsrichtung im Wesentlichen parallel zu der Hauptlängserstreckungsrichtung der Dichtlippe verläuft.

Um eine regendichte Verbindung zweier in vertikaler Richtung benachbarter plattenförmiger Module zu schaffen, wird vorgeschlagen, dass - im bestimmungsgemäß montierten Zustand des Systems - der erste Aufnahmeabschnitt des Halters im Wesentlichen oberhalb des zweiten Aufnahmeabschnitts angeordnet ist, so dass vorzugsweise das erste Modul das zweite Modul überlappt. Auf diese Weise kann, ähnlich wie dies von herkömmlichen Dachziegeln bekannt ist, eine schuppenartige Struktur der Dachhaut erzielt werden.

Besonders einfach kann der wenigstens eine Halter ausgebildet werden, wenn er in der Seitenansicht im Wesentlichen die Form eines S bzw. eines an der Vertikalen gespiegelten S aufweist, wobei die obere Öffnung der S-Form den ersten Aufnahmeabschnitt und die untere Öffnung der S-Form den zweiten Aufnahmeabschnitt bildet.

Dabei kann der Halter kostengünstig im Wesentlichen aus einem Metall, insbesondere aus Aluminium oder Edelstahl, gebildet sein, wobei der Halter vorzugsweise als Stanz-Biegeteil ausgebildet ist. Somit können auf sehr einfache Weise strukturell stabile Halter kostengünstig hergestellt werden. Der Halter kann auch aus einer Mehrzahl von relativ dünnen Stanz-Biegeteilen gefertigt sein, welche zur Erzielung einer hohen Festigkeit des Halters vorzugsweise miteinander verbunden sind, beispielsweise durch Verschweißen oder Vernieten. Der Halter weist in diesem Fall eine so genannte "Sandwich-Konstruktion" auf. Ein besonderer Vorteil einer derartigen Sandwich-Konstruktion liegt darin, dass sich kleinere Biegeradien am Halter realisieren lassen, da das Material, aus dem das einzelne Stanz-Biegeteil gebildet wird, zum Beispiel Blech, merklich dünner ist, verglichen zu einer Lösung, bei der der Halter aus nur einem Stanz-Biegeteil gefertigt wird.

Es sei an dieser Stelle angemerkt, dass der firstseitige Rand des zweiten Moduls im zweiten Aufnahmeabschnitt durch das Dichtlippenprofil des erfindungsgemäßen Systems vor einem direkten Kontakt mit dem Halter geschützt ist. Es kann von Vorteil sein, auch den traufenseitigen Rand des ersten plattenförmigen Moduls, welcher im ersten Aufnahmeabschnitt des Halters aufzunehmen ist, mit einem aus Kunststoff gebildeten Kantenschutz zu versehen, um einen direkten Kontakt des Moduls mit dem Halter zu verhindern. Ein direkter Kontakt könnte ansonsten unter Umständen zu einer Beschädigung des plattenförmigen Moduls führen. Alternativ kann der erste Aufnahmeabschnitt des Halters auch direkt mit einem solchen Kantenschutz, z.B. mit einem weichen Kunststoff, ausgekleidet sein.

Der zweite Aufnahmeabschnitt ist vorzugsweise so dimensioniert, dass er den firstseitigen Rand des zweiten Moduls zusammen mit dem mit diesem Rand gekoppelten Dichtlippenprofil aufnehmen kann. Aus diesem Grund ist der zweite Aufnahmeabschnitt in der Regel größer als der erste Aufnahmeabschnitt des Halters zu dimensionieren.

Um selektiv einzelne plattenförmige Module, z.B. nach einer Beschädigung durch Hagel, auswechseln zu können, ohne andere, traufenseitig angeordnete Module zuvor deinstallieren zu müssen, wird vorgeschlagen, dass - bezüglich der Tiefenrichtung der beiden Öffnungen - die untere Öffnung der S-Form, welche den zweiten Aufnahmeabschnitt bildet, größer dimensioniert ist als die obere Öffnung der S-Form, welche den ersten Aufnahmeabschnitt bildet, um zu erlauben, dass der firstseitige Rand des zweiten Moduls zusammen mit dem mit diesem Rand gekoppelten Dichtlippenprofil innerhalb des zweiten Aufnahmeabschnitts in Tiefenrichtung um mindestens die Strecke verschoben werden kann, die der Tiefe des ersten Aufnahmeabschnitts entspricht. Hierdurch ist es nämlich möglich, das zweite Modul entgegen der Schwerkraft in den zweiten Aufnahmeabschnitt hineinzuschieben, wodurch der traufenseitige Rand des zweiten Moduls außer Eingriff mit dem ersten Aufnahmeabschnitt eines entsprechenden weiteren Halters gelangt. Anschließend lässt sich das zweite Modul leicht nach oben neigen und aus dem zweiten Aufnahmeabschnitt am firstseitigen Rand entfernen. Eine Demontage anderer, benachbarter plattenförmiger Module ist hierbei nicht erforderlich.

Wie zuvor beschrieben, ist es aus Kosten- und Fertigungsgründen vorteilhaft, den Halter als Stanz-Biegeteil auszubilden. Dabei kann die Wandstärke des plattenförmigen Materials, aus dem der Halter hergestellt wird, relativ dünn sein, d.h. eine Dicke von nur einigen wenigen Millimetern aufweisen. Um jedoch eine Luftzirkulation entlang der Unterseite der verlegten plattenförmigen Module zu erlauben, um der Bildung von Kondenswasser an der Unterseite entgegenzuwirken, und um eine Kühlung der plattenförmigen Module zu bewirken, wird vorgeschlagen, dass das System ferner ein Abstandselement umfasst, welches zwischen einer Bodenfläche des zweiten Aufnahmeabschnitts des Halters und dem Dichtlippenprofil angeordnet oder anordenbar ist, wobei das Abstandselement vorzugsweise separat von dem Halter ausgebildet ist. Bei dem Abstandselement kann es sich bspw. um ein kostengünstig herzustellendes Kunststoffelement, bspw. in der Form eines quaderförmigen Klotzes, handeln. Auf diese Weise kann sichergestellt werden, dass Luft an der Unterseite der plattenförmigen Module frei strömen kann, insbesondere auch im Überlappungsbereich zweier vertikal benachbarter, plattenförmiger Module, zumindest an den Stellen, an denen der wenigstens eine Halter nicht vorgesehen ist. Zugleich sorgt das Abstandselement dafür, dass das Dichtlippenprofil sicher zwischen dem Abstandselement und einem oberen Abschnitt, bzw. dem ersten Aufnahmeabschnitt, des Halterelements eingeklemmt werden kann. Das Abstandselement kann bspw. mittels Schrauben mit dem Halter und/oder der darunter angeordneten Dachstruktur verbunden werden. Um auch im Hinblick auf verschiedene plattenförmige Module mit unterschiedlichen Dicken einen hohen Grad an Flexibilität zu gewährleisten, kann daran gedacht werden, das Abstandselement aus einer Mehrzahl relativ dünner Platten zu bilden, welche je nach verwendeter Anzahl die gewünschte Höhe des Abstandselements ergeben.

Insbesondere ist es vorteilhaft, wenn das Abstandselement eine Dicke aufweist, die derart bemessen ist, dass - im bestimmungsgemäß montierten Zustand des Systems - das freie obere Ende der Dichtlippe, zumindest abschnittsweise, mit der Unterseite des ersten Moduls in Kontakt ist. Auf diese Weise kann ein relativ großer Grad an Dichtigkeit zwischen zwei sich in vertikaler Richtung überlappender Module erzielt werden.

In einer alternativen Ausführungsform der vorliegenden Erfindung wird die oben genannte Aufgabe auch durch ein Montage- und Dichtsystem zum Einbau einer Mehrzahl plattenförmiger Module in ein Schrägdach gelöst, welches wenigstens einen Halter mit einem ersten Aufnahmeabschnitt zur Aufnahme eines Abschnitts eines traufenseitigen Randes eines ersten Moduls und einem zweiten Aufnahmeabschnitt zur Aufnahme eines Abschnitts eines firstseitigen Randes eines zweiten Moduls umfasst, und welches ferner ein Dichtlippenprofil mit einem Kopplungsabschnitt zur Kopplung des Dichtlippenprofils mit dem traufenseitigen Rand des ersten Moduls und einer Dichtlippe, deren Hauptlängserstreckungsrichtung - im bestimmungsgemäß montierten Zustand des Systems - im Wesentlichen horizontal verläuft, wobei ein oberes Ende der Dichtlippe mit dem Kopplungsabschnitt verbunden ist und ein freies unteres Ende der Oberseite des zweiten Moduls zugewandt ist, umfasst. Die Dichtlippe weist dabei wenigstens eine Aussparung auf, welche derart angeordnet ist, dass Kondenswasser, das sich - im bestimmungsgemäß montierten Zustand des Systems - an der Unterseite des ersten Moduls gebildet hat, - im bestimmungsgemäß montierten Zustand des Systems - auf die Oberseite des zweiten Moduls abgeleitet wird.

Diese alternative Lösung der vorliegenden Erfindung unterscheidet sich von der zuvor beschriebenen Lösung im Wesentlichen nur darin, dass die Befestigung des Dichtlippenprofils nicht am firstseitigen Rand des unteren Moduls, sondern am traufenseitigen Rand des oberen Moduls erfolgt. Dementsprechend erstreckt sich die Dichtlippe nicht mit ihrem freien Ende nach oben zu der Unterseite des oberen Moduls, sondern nach unten zu der Oberseite des unteren Moduls. Das Dichtlippenprofil kann auch in diesem Fall eine Rinne zum Sammeln des Kondenswassers aufweisen, wobei dies jedoch nicht zwingend ist. Die zuvor beschriebenen vorteilhaften Weiterbildungen sind jedoch sinngemäß genauso auf die alternative Lösung anwendbar.

Allgemein sei an dieser Stelle noch angemerkt, dass ein "Schrägdach" im Sinne der vorliegenden Erfindung eine beliebige Neigung, d.h. einen Winkel größer 0°, gegenüber der Horizontalen aufweisen kann. Im Extremfall kann diese Neigung sogar bis etwa 90° reichen, so dass das "Schrägdach" im Wesentlichen vertikal ausgerichtet ist. Bei diesem Extremfall könnten die plattenförmigen Module zum Beispiel vor bzw. an der Fassade eines Gebäudes wie eine Art Verblendung anbracht werden, wobei die Fassade durch die Module vor Witterungseinflüssen geschützt wird.

Ferner sei angemerkt, dass mit dem Begriff "Aussparung" im Sinne der vorliegenden Erfindung jede Form von irgendwie gearteten Durchbrüchen zu verstehen ist, also zum Beispiel Ausnehmungen, Löcher und Schlitze.

Die vorliegende Erfindung wird anhand der in den Figuren dargestellten Ausführungsformen nachfolgend näher beschrieben. Es stellen dar:
- FIGUR 1: eine Draufsicht auf eine Anordnung zweier in vertikaler Richtung benachbarter plattenförmiger Module, die mittels des erfindungsgemäßen Montage- und Dichtsystems miteinander verbunden sind;
- FIGUR 2: eine vergrößerte partielle Querschnittsansicht entlang der Linie II-II aus Figur 1;
- FIGUR 3: eine vergrößerte partielle Querschnittsansicht entlang der Linie III-III aus Figur 1;
- FIGUR 4: eine vergrößerte partielle Querschnittsansicht entlang der Linie IV-IV aus Figur 1;
- FIGUR 5: eine Querschnittsansicht ähnlich wie in Figur 4, jedoch von einer alternativen Ausführungsform;
- FIGUR 6: eine perspektivische Darstellung des Dichtlippenprofils des erfindungsgemäßen Montage- und Dichtsystems;
- FIGUR 7: eine perspektivische Darstellung eines Halters und eines Abstandselements des erfindungsgemäßen Montage- und Dichtsystems;
- FIGUREN 8a-8c: eine zweite Ausführungsform eines Dichtlippenprofils des erfindungsgemäße Montage- und Dichtsystems, wobei die Figuren 8a und 8b Querschnittsansichten des Dichtlippenprofils, einmal ohne eingesetzte und einmal mit eingesetzter zusätzlicher Dichtlippe zeigen, und Figur 8c eine perspektivische Darstellung zeigt;
- FIGUR 9: eine dritte Ausführungsform eines Dichtlippenprofils des erfindungsgemäße Montage- und Dichtsystems in einer Querschnittsansicht und in einer Draufsicht von oben; und
- FIGUR 10: eine vierte Ausführungsform eines Dichtlippenprofils des erfindungsgemäße Montage- und Dichtsystems in einer Querschnittsansicht und in einer Draufsicht von oben.

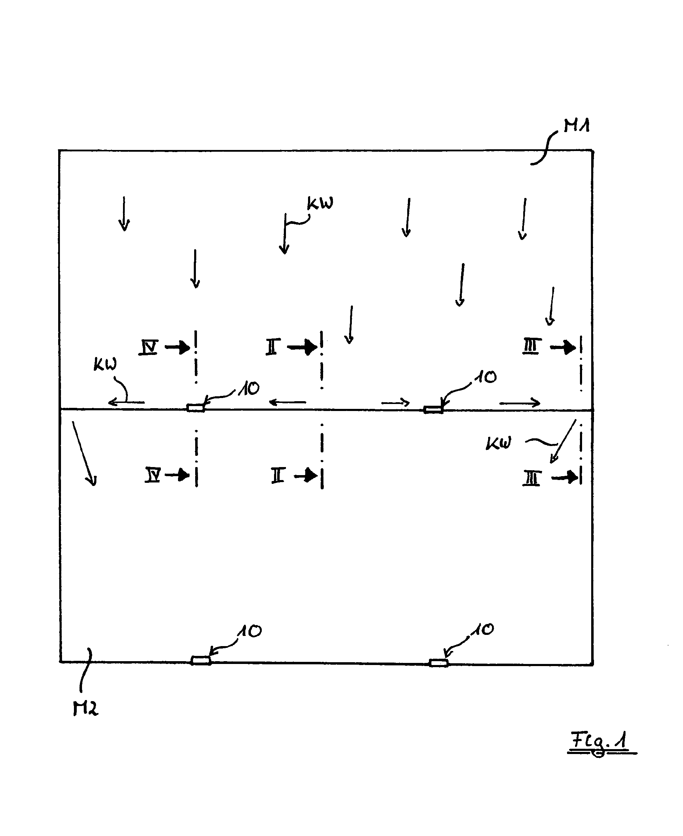

Figur 1 veranschaulicht eine einfache Anordnung zweier in vertikaler Richtung benachbarter plattenförmiger Module M1 und M2, die mittels des erfindungsgemäßen Montage- und Dichtsystems in ein ansonsten nicht näher dargestelltes Schrägdach eingebaut sind. Bei den beiden gezeigten plattenförmigen Modulen M1 und M2, welche beide im Wesentlichen identisch ausgebildet sind und eine rechteckige Grundform aufweisen, handelt es sich vorzugsweise um Solarmodule. Das weiter oben, d.h. zum First des Schrägdachs hin, angeordnete Modul M1 überlappt mit seinem unteren, d.h. traufenseitigen Rand, den oberen Bereich des weiter unten, d.h. zur Traufe des Schrägdachs hin, angeordneten Moduls M2. In Figur 1 sind ferner Abschnitte von vier identisch ausgebildeten Haltern 10 zu erkennen, welche zur Halterung der beiden Module M1 und M2 dienen.

Ferner sind in Figur 1 mehrere Pfeile gezeigt, welche die Fließrichtung von Kondenswasser KW veranschaulichen, das sich an der Unterseite des oberen Moduls M1 gebildet hat. Dieses Kondenswasser KW strömt an der Unterseite des oberen, ersten Moduls M1 der Schwerkraft folgend zu dessen unterem bzw. traufenseitigem Rand, wo es, wie nachfolgend noch näher beschrieben wird, gegen eine Dichtlippe eines Dichtlippenelements stößt und in einer Rinne gesammelt wird, um in der Rinne zu den beiden längsseitigen Endabschnitten des Dichtlippenprofils geleitet zu werden, von wo es mittels einer jeweils an dem Längsende vorgesehenen Aussparung in der Dichtlippe aus der Rinne austritt, um auf die Oberseite des zweiten, unteren Moduls M2 zu gelangen.

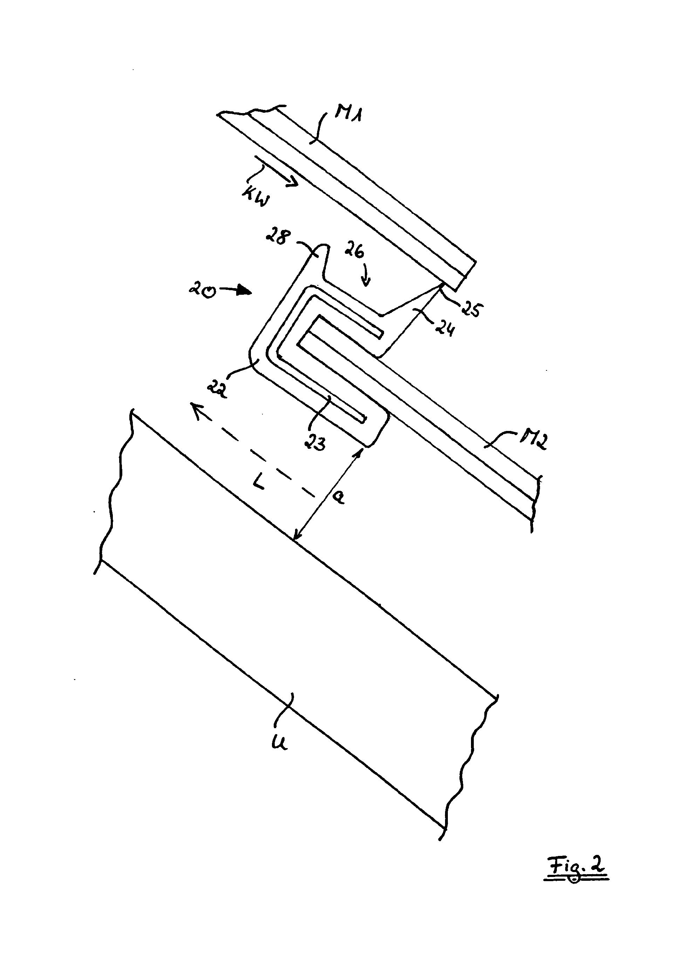

Figur 2 zeigt in einem gegenüber Figur 1 vergrößerten Maßstab eine partielle Querschnittsansicht der in Figur 1 dargestellten Anordnung, nämlich eine Querschnittsansicht entlang der Linie II-II in Figur 1. Zu erkennen sind wiederum das erste, obere plattenförmige Modul M1 und das zweite, untere plattenförmige Modul M2, sowie ein Dichtlippenprofil 20. Das Dichtlippenprofil 20 umfasst einen Kopplungsabschnitt 22, mit dessen Hilfe das Dichtlippenprofil 20, wie in Figur 2 dargestellt, in Kopplungseingriff mit dem oberen, firstseitigen Rand des zweiten, unteren Moduls M2 bringbar bzw. gebracht ist. Das Dichtlippenprofil 20 besteht überwiegend aus Ethylen-Propylen-Dien-Kautschuk, welches auch als Ethylen-Propylen-Dien-Monomer bzw. EPDM bekannt ist. Hierbei handelt es sich um ein elastisches und relativ witterungsfestes Material. Eingebettet in den EPDM-Kunststoff ist ein C-förmiges Verstärkungselement 23, welches aus einem Material, bspw. Metall, gebildet ist, das eine höhere Festigkeit als der es umgebende Kunststoff aufweist. Aufgrund seines Materials und seiner Form weist das Verstärkungselement 23 elastische Eigenschaften auf und sorgt somit dafür, dass der Kopplungsabschnitt 22 des Dichtlippenprofils 20 mit dem oberen, firstseitigen Rand des zweiten, unteren Moduls M2 in Klemmeingriff bringbar ist bzw. gebracht ist. Der Kopplungsabschnitt 22 ist dabei selbst im Wesentlichen C-förmig ausgebildet, so dass der firstseitige Rand des zweiten Moduls in die Öffnung der C-Form eingeschoben werden kann.

Ferner umfasst das Dichtlippenprofil 20 eine Dichtlippe 24, deren unteres Ende integral mit dem Kopplungsabschnitt 22 verbunden ist, und deren freies oberes Ende sich von dem Kopplungsabschnitt 22 weg und zu der Unterseite des ersten Moduls M1 hin erstreckt. Dabei liegt das obere freie Ende 25 der Dichtlippe 24 an der Unterseite des ersten Moduls M1 an. Ein Oberflächenabschnitt der Dichtlippe 24 begrenzt einen Teil der Rinne 26, welche dazu dient, Kondenswasser KW, welches sich an der Unterseite des ersten Moduls M1 gebildet hat, zu sammeln und abzuleiten. Die Rinne 26 wird ferner von einem Oberflächenabschnitt des Kopplungsabschnitts 22 begrenzt, sowie von einem an den Kopplungsabschnitt 22 angeformten Vorsprung 28. Das sich an der Unterseite des ersten Moduls M1 bildende Kondenswasser KW fließt, der Schwerkraft folgend, entlang der Unterseite des ersten Moduls M1 nach unten, bis es auf das obere freie Ende 25 der Dichtlippe 24 stößt. Von dort gelangt das Kondenswasser KW in die Rinne 26, von wo es über die nachfolgend noch beschriebenen Aussparungen in der Dichtlippe 24 auf die Oberfläche des zweiten Moduls M2 abgeleitet wird. In dem dargestellten, bestimmungsgemäß montierten Zustand des erfindungsgemäßen Systems verläuft die Rinne 26 in im Wesentlichen horizontaler Richtung, d.h. parallel zu dem firstseitigen, oberen Rand des zweiten, unteren Moduls M2.

Ferner ist in Figur 2 ein Abschnitt der Unterkonstruktion U des Schrägdachs zu erkennen, welche dazu dient, die Dachhaut zu tragen. Wie ferner in Figur 2 zu erkennen ist, ist das Dichtlippenprofil 20 im Abstand a zu der Unterkonstruktion U angeordnet. Dies ermöglicht Luft L, durch den Spalt zwischen Dichtlippenprofil 20 und Unterkonstruktion U zu strömen, wie durch einen gestrichelten Pfeil in Figur 2 angedeutet. Eine derartige Luftströmung ist durchaus erwünscht, da die Luft zum einen der Bildung von Kondenswasser an der Unterseite der plattenförmigen Module entgegenwirkt, und zum anderen für eine Kühlung der plattenförmigen Module sorgt. Insbesondere dann, wenn es sich bei den plattenförmigen Modulen um Solarmodule handelt, welche in der Regel eine dunkle Farbe aufweisen und sich somit schnell in der Sonne erwärmen, ist eine Kühlung vorteilhaft, da der Wirkungsgrad von Solarmodulen mit von deren Temperatur abhängt.

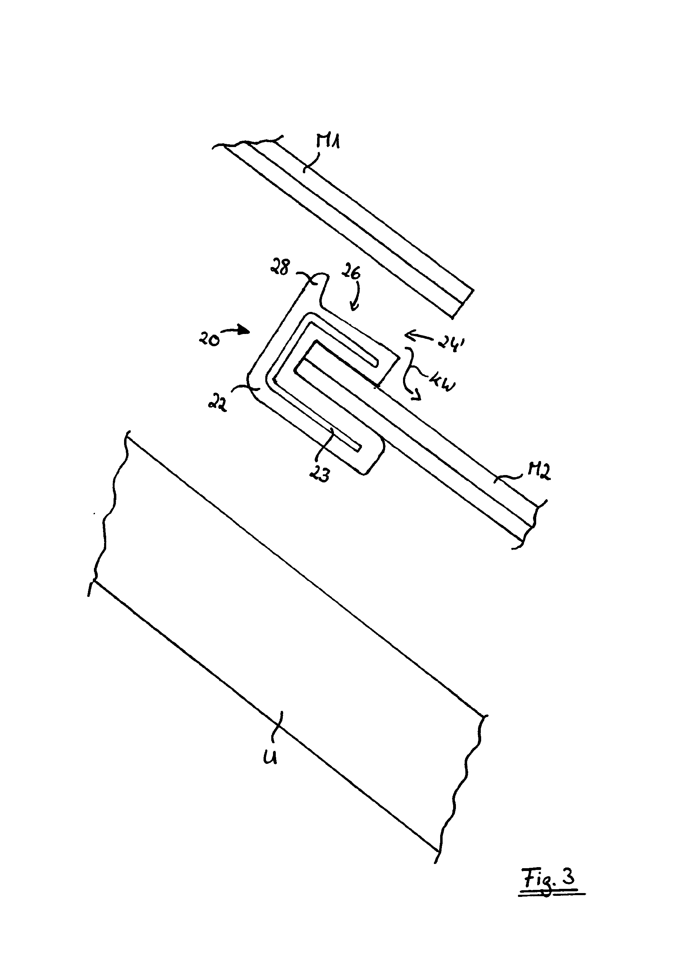

Figur 3 zeigt eine Schnittansicht ähnlich jener in Figur 2, jedoch entlang der Linie III-III in Figur 1. Wie in Figur 3 zu erkennen ist, unterscheidet sich das Dichtlippenprofil 20 an dieser Stelle von dem Dichtlippenprofil 20, das in Figur 2 gezeigt ist, darin, dass die Dichtlippe 24 fehlt. An dieser Stelle befindet sich stattdessen eine Aussparung 24', so dass der Kanal 26 zur Außenumgebung hin geöffnet ist. Somit kann das in dem Kanal 26 gesammelte Kondenswasser KW an dieser Stelle aus dem Kanal 26 austreten, um auf die Oberfläche des zweiten, unteren Moduls M2 zu gelangen. Von dort aus kann es wie normales Regenwasser zu der Traufe des Hausdaches, bspw. einer Regenrinne, geführt werden, um von da aus weiter, z.B. in die Kanalisation, geleitet zu werden. Es ist hierbei nicht notwendig, eine geeignete Drainageleitung an der Unterkonstruktion U vorzusehen, um das gesammelte Kondenswasser KW abzuleiten.

Es sei angemerkt, dass in der vorliegenden Ausführungsform zwei Aussparungen 24' an der Dichtlippe 24 vorgesehen sind, nämlich jeweils eine Aussparung an jedem der beiden Längsenden des Dichtlippenprofils 20. Es wäre jedoch auch denkbar, lediglich eine Aussparung oder mehr als zwei Aussparungen vorzusehen.

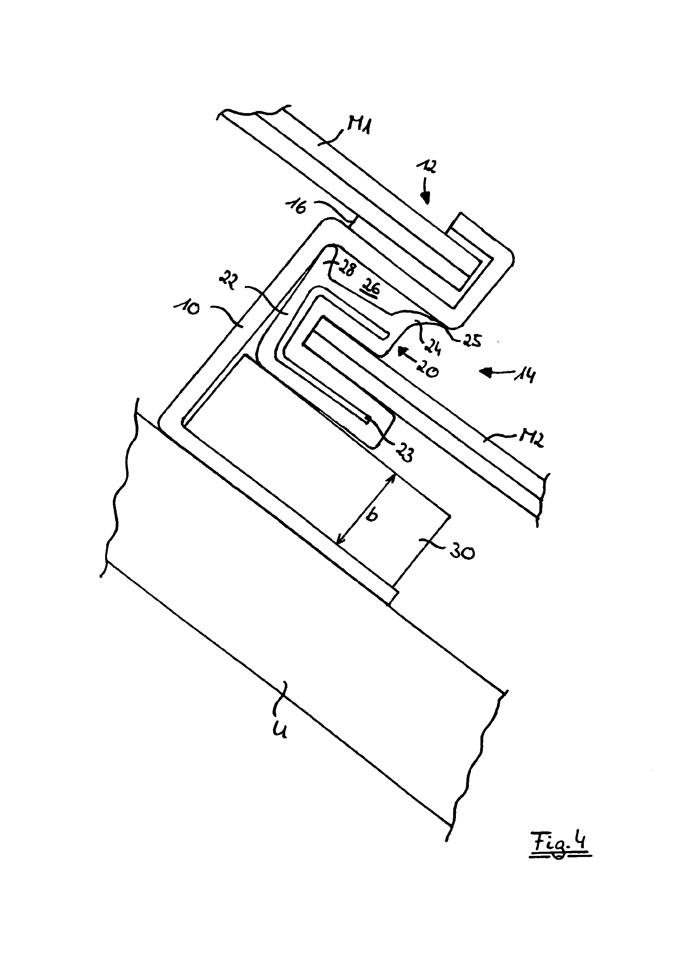

Figur 4 zeigt eine Querschnittsdarstellung ähnlich jenen der Figuren 2 und 3, jedoch entlang der Linie IV-IV in Figur 1. An dieser Stelle befindet sich einer der in Figur 1 angedeuteten Halter 10. Bei dem Halter 10 handelt es sich in der vorliegenden Ausführungsform um ein metallisches Stanz-Biegeteil, bspw. aus Aluminium oder Edelstahl. Ein solcher Halter 10 kann sehr kostengünstig hergestellt werden. Der Halter 10 weist in der Ansicht von Figur 4 im Wesentlichen die Form eines an der Vertikalen gespiegelten S auf, wobei die obere Öffnung einen ersten Aufnahmeabschnitt 12 zur Aufnahme eines Abschnitts des traufenseitigen Randes des ersten Moduls M1 definiert, während die untere Öffnung der S-Form einen zweiten Aufnahmeabschnitt 14 zur Aufnahme eines Abschnitts des firstseitigen Randes des zweiten Moduls M2 definiert. Der zweite Aufnahmeabschnitt 14 ist dabei größer als der erste Aufnahmeabschnitt 12 dimensioniert. Der erste Aufnahmeabschnitt 12 nimmt lediglich den entsprechenden Abschnitt des traufenseitigen Randes des ersten Moduls M1, sowie einen aus Kunststoff gefertigten Kantenschutz 16 auf. Der Kantenschutz 16 dient dazu, einen direkten Kontakt des plattenförmigen ersten Moduls M1 mit dem metallischen Halter 10 zu verhindern und somit Beschädigungen am ersten Modul M1 zu vermeiden. Der zweite Aufnahmeabschnitt 14 nimmt einen entsprechenden Abschnitt des firstseitigen Randes des zweiten Moduls M2, sowie das Dichtlippenprofil 20 und ein von dem Halter 10 separat ausgebildetes Abstandselement 30 auf. Das Abstandselement 30 weist eine Höhe b auf, die derart dimensioniert ist, dass das Dichtlippenprofil 20 mit dem damit gekoppelten firstseitigen Randabschnitt des zweiten Moduls M2 in dem zweiten Aufnahmeabschnitt 14 verklemmt wird. Aufgrund der elastischen Eigenschaften des Kunststoffmaterials der Dichtlippe 24 kann sich diese verformen und liegt abschnittsweise flächig an der Oberseite des zweiten Aufnahmeabschnitts 14 des Halters 10 an. Auch der Fortsatz 28 des Dichtlippenprofils 20 liegt vorzugsweise an der Oberseite des zweiten Aufnahmeabschnitts 14 an. Das Abstandselement 30 kann ebenfalls aus einem Kunststoff gefertigt sein. Das Abstandselement 30 weist dabei im Wesentlichen die Form eines Quaders auf. Die Höhe b des Abstandselements 30, zusammen mit der Materialstärke des Halters 10, definieren dabei den in Figur 2 gezeigten Abstand a zwischen dem Dichtlippenprofil 20 und der Unterkonstruktion U. Um die in Figur 2 angedeutete Luftströmung unter der Dachhaut im ausreichenden Maß zu ermöglichen, beträgt der Abstand a vorzugsweise wenigstens einen Zentimeter, stärker bevorzugt mehrere Zentimeter.

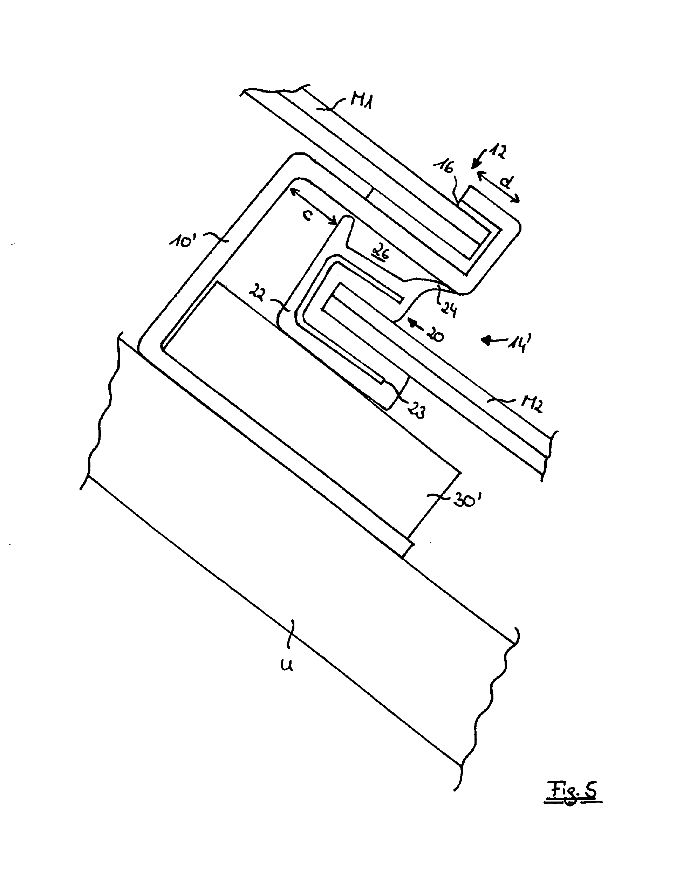

Figur 5 zeigt eine ähnliche Querschnittsansicht wie Figur 4, jedoch von einer weiteren, alternativen Ausführungsform des erfindungsgemäßen Montage- und Dichtsystems. Diese zweite Ausführungsform unterscheidet sich von der zuvor beschriebenen Ausführungsform darin, dass der zweite Aufnahmeabschnitt 14' des Halters 10' hinsichtlich seiner Tiefenrichtung größer ausgebildet ist als bei der ersten Ausführungsform. Hierdurch verbleibt im bestimmungsgemäß montierten Zustand des Systems hinter dem Dichtlippenprofil 20 ein Freiraum, welcher in Tiefenrichtung der unteren Öffnung des S-förmigen Halters 10' im Wesentlichen die Abmessung c aufweist. Diese Abmessung ist wenigstens so groß wie die Tiefe d der oberen Öffnung des S-förmigen Halters 10'. Hierdurch ist es möglich, zur Demontage einzelner plattenförmiger Module das zweite Modul M2 entgegen der Schwerkraft nach oben zu schieben, wobei sich der Freiraum mit der Tiefe c verringert, bis ein in Figur 5 nicht dargestellter, traufenseitiger Randabschnitt des zweiten Moduls M2 aus dem ersten Aufnahmeabschnitt eines ebenfalls nicht dargestellten unteren Halters 10 hinausgelangt. Der traufenseitige Randabschnitt des zweiten Moduls M2 entspricht dem in Figur 5 dargestellten traufenseitigen Randabschnitt des ersten Moduls M1. Anschließend kann das zweite Modul M2 leicht an seinem traufenseitigen Rand angehoben werden und mit seinem firstseitigen Randabschnitt aus dem ersten Aufnahmeabschnitt des Halters 10' gezogen werden. Somit ist es möglich, selektiv einzelne plattenförmige Module, z.B. wenn diese, etwa durch Hagel, beschädigt sind, aus einem Verbund von mehreren solcher Module zu entfernen, ohne die anderen Module ebenfalls entfernen zu müssen. In umgekehrter Reihenfolge kann dann ein neues oder repariertes Modul in den Verbund wieder eingefügt werden.

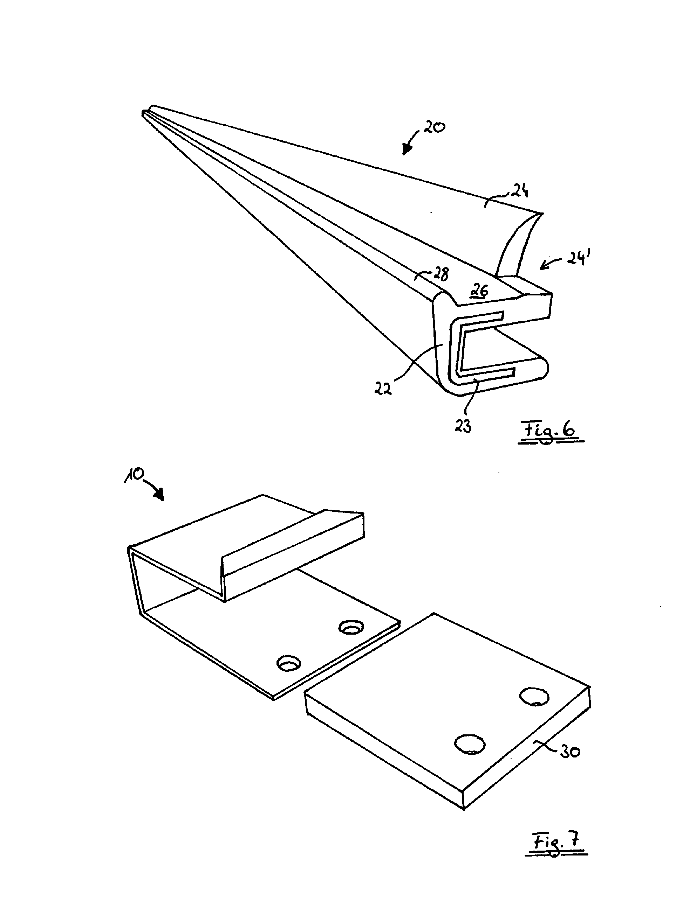

Figur 6 zeigt eine perspektivische Darstellung des Dichtlippenprofils 20, wobei eine der beiden Aussparungen 24' in der Dichtlippe 24 an einem der beiden Längsenden des Dichtlippenprofils 20 deutlich zu erkennen ist. Ferner ist in Figur 6 zu erkennen, dass das stirnseitige Längsende des Verstärkungselements 23 nicht von dem elastischen Kunststoff des Dichtlippenprofils 20 umgeben ist. Dies ist jedoch nicht zwingend, vielmehr könnte das Verstärkungselement auch von dem Kunststoff verdeckt sein, insbesondere dann, wenn es im besonderen Maße vor Witterungseinflüssen geschützt werden soll.

Figur 7 zeigt eine perspektivische Darstellung des Halters 10 und des Abstandselements 30. Wie in Figur 7 zu erkennen ist, können sowohl der Halter 10 als auch das Abstandselement 30 jeweils zwei Bohrungen aufweisen, welche im bestimmungsgemäß montierten Zustand des erfindungsgemäßen Montage- und Dichtsystems derart miteinander fluchten, dass der Halter 10 zusammen mit dem Abstandselement 30 mithilfe von zwei nicht dargestellten Schrauben an der Unterkonstruktion U des Schrägdaches befestigt werden kann.

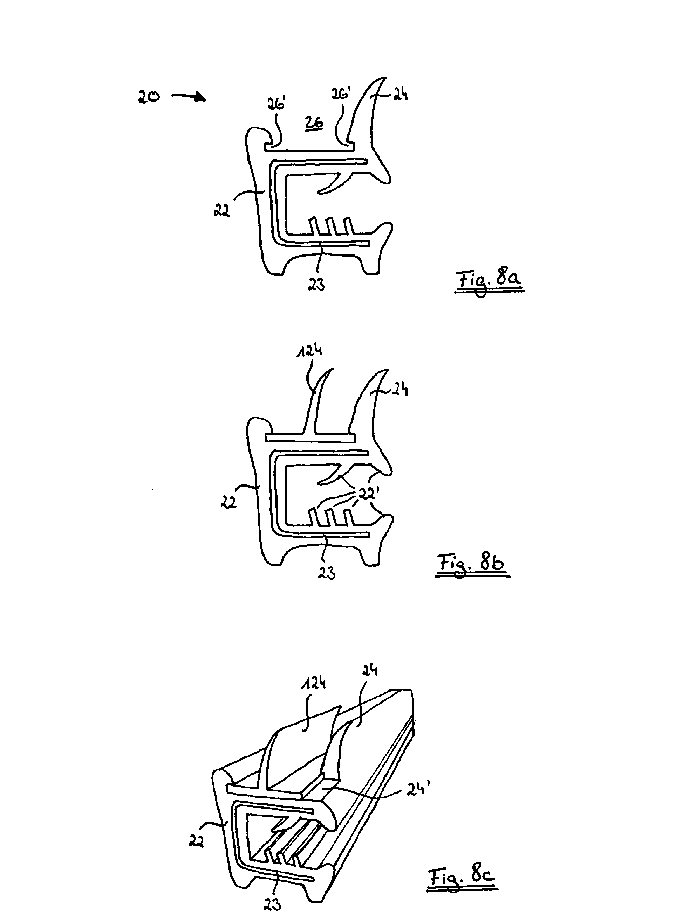

Figuren 8a-8c zeigen eine zweite Ausführungsform eines Dichtlippenprofils des erfindungsgemäße Montage- und Dichtsystems. Gegenüber der zuvor beschriebenen, ersten Ausführungsform funktional und/oder strukturell identische bzw. ähnliche Bauteilabschnitte dieser Ausführungsform weisen die gleichen Bezugszeichen wie die zuvor beschriebene Ausführungsform auf.

Die zweite Ausführungsform des Dichtlippenprofils 20 unterscheidet sich von der ersten Ausführungsform insbesondere darin, dass die Rinne 26 seitlich zwei Nutenähnliche Ausnehmungen 26' aufweist, welche dazu ausgebildet sind, eine weitere Dichtlippe 124 in der Rinne 26 aufzunehmen, wie in den Figuren 8b und 8c zu erkennen ist. Das Vorsehen der weiteren Dichtlippe 124 hinter der eigentlichen Dichtlippe 24 weist den Vorteil auf, dass selbst das Eindringen nur geringer Mengen an Schlagwasser und/oder Flugschnee unter die Dachhaut mit hoher Zuverlässigkeit verhindert werden kann. Hierzu ist die weitere Dichtlippe entlang der Längserstreckungsrichtung des Dichtlippenprofils 20 an den Stellen angeordnet, an denen die Dichtlippe 24 die Aussparungen 24' aufweist. Die weitere Dichtlippe 124 erstreckt sich bei dieser Ausführungsform nicht im Wesentlichen über die gesamte Länge des Dichtlippenprofils 20, sondern nur abschnittsweise in den Bereichen der Aussparungen 24' der Dichtlippe 24. Die jeweiligen Abschnitte der weiteren Dichtlippe 124 sind dabei jedoch vorzugsweise in Längserstreckungsrichtung des Dichtlippenprofils 20 länger als die ihnen zugeordneten Aussparungen 24' der Dichtlippe 24. Kondenswasser, welches sich von der Aussparung 24' aus betrachtet hinter der weiteren Dichtlippe 124 angesammelt hat, kann somit in der Rinne 26 um die weitere Dichtlippe 124 herum zu der Aussparung 24' gelangen und von dort aus der Rinne 26 auf die Oberseite des unteren Moduls abfließen.

Darüber hinaus unterscheidet sich die zweite Ausführungsform des Dichtlippenprofils 20 von der ersten Ausführungsform darin, dass der Kopplungsabschnitt 22 eine leicht modifizierte Form aufweist. Insbesondere umfasst er eine Mehrzahl lamellenartiger Vorsprünge 22', um die Kopplung mit dem zweiten, unteren Modul zu verbessern. Gleichwohl kann in dem Kopplungsabschnitt 22 zusätzlich für die zuverlässige Kopplung auch noch ein Verstärkungselement 23 eingebettet sein, wie es bei der ersten Ausführungsform beschrieben worden ist, auch wenn dies nicht zwingend ist.

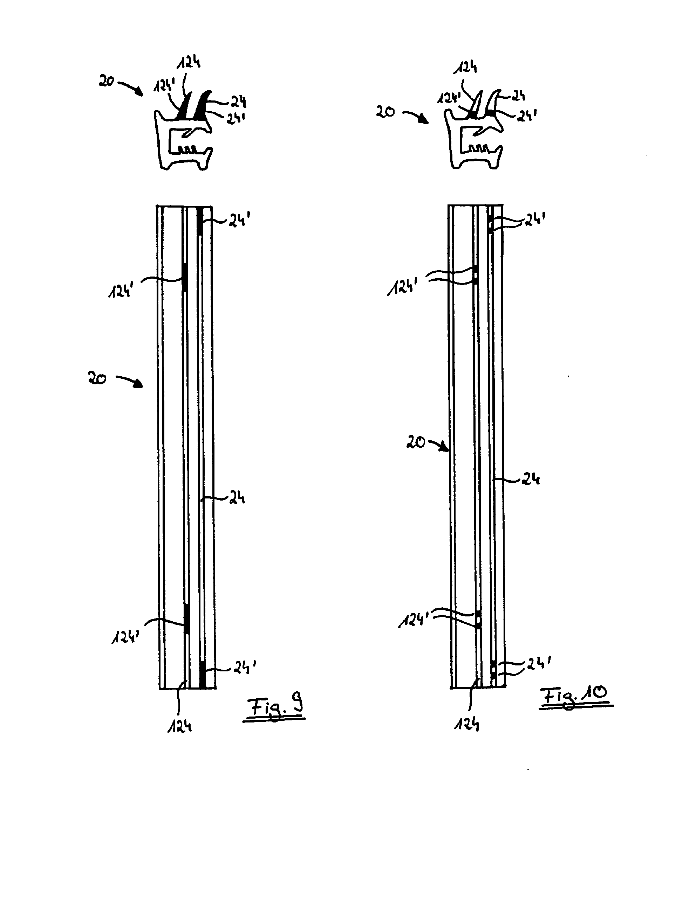

Figur 9 zeigt eine dritte Ausführungsform eines Dichtlippenprofils des erfindungsgemäße Montage- und Dichtsystems, nämlich einmal in einer Querschnittsansicht und einmal in der Draufsicht von oben. Im Vergleich zu der zuvor beschriebenen, zweiten Ausführungsform funktional und/oder strukturell identische bzw. ähnliche Bauteilabschnitte dieser Ausführungsform weisen die gleichen Bezugszeichen wie die zweite Ausführungsform auf.

Im Gegensatz zu der zweiten Ausführungsform erstreckt sich bei der dritten Ausführungsform des Dichtlippenprofils 20 die weitere Dichtlippe im Wesentlichen über die gesamte Länge des Dichtlippenprofils 20, wodurch die Rinne 26 im Wesentlichen in zwei Teilrinnen unterteilt wird. Die beiden Teilrinnen sind jedoch durch Ausnehmungen 124' in der weiteren Dichtlippe 124 miteinander verbunden, so dass Kondenswasser von der einen Teilrinne in die andere Teilrinne gelangen kann. Wichtig hierbei ist, dass die Ausnehmungen 124' in der weiteren Dichtlippe 124 versetzt zu den Ausnehmungen 24' in der Dichtlippe 24 entlang der Längserstreckungsrichtung des Dichtlippenprofils 20 angeordnet sind, um das Eindringen auch nur geringer Mengen an Schlagwasser und/oder Flugschnee unter die Dachhaut mit hoher Zuverlässigkeit zu verhindern. In Figur 9 sind die jeweiligen Ausnehmungen 24' bzw. 124' jeweils dunkel hervorgehoben. Die weitere Dichtlippe 124 ist bei dieser Ausführungsform integral mit dem restlichen Dichtlippenprofil 20 ausgebildet.

Figur 10 zeigt eine vierte Ausführungsform eines Dichtlippenprofils des erfindungsgemäße Montage- und Dichtsystems, einmal in einer Querschnittsansicht und einmal in der Draufsicht von oben. Im Vergleich zu der zuvor beschriebenen, dritten Ausführungsform funktional und/oder strukturell identische bzw. ähnliche Bauteilabschnitte dieser Ausführungsform weisen die gleichen Bezugszeichen wie die dritte Ausführungsform auf.

Im Gegensatz zu der dritten Ausführungsform erstrecken sich bei der vierten Ausführungsform des Dichtlippenprofils 20 die Ausnehmungen 24' in der Dichtlippe 24 und die Ausnehmungen 124' in der weiteren Dichtlippe 124 nicht über die gesamte Höhe der Dichtlippe 24 bzw. der weiteren Dichtlippe 124, sondern sind lediglich in Form kleinerer Bohrungen im unteren Bereich der Dichtlippe 24 bzw. der weiteren Dichtlippe 124 in selbige eingebracht. In dieser Ausführungsform umfasst die Dichtlippe 24 insgesamt vier Ausnehmungen bzw. Bohrungen 24', und umfasst auch die weitere Dichtlippe 124 insgesamt vier Ausnehmungen bzw. Bohrungen 124'. Wichtig hierbei ist wieder, dass die Ausnehmungen bzw. Bohrungen 124' in der weiteren Dichtlippe 124 versetzt zu den Ausnehmungen bzw. Bohrungen 24' in der Dichtlippe 24 bezüglich der Längserstreckungsrichtung des Dichtlippenprofils 20 angeordnet sind, um das Eindringen auch nur geringer Mengen an Schlagwasser und/oder Flugschnee unter die Dachhaut mit hoher Zuverlässigkeit zu verhindern. Auch in Figur 10 sind die jeweiligen Ausnehmungen 24' bzw. 124' jeweils dunkel hervorgehoben.

## Patentansprüche

1. Montage- und Dichtsystem zum Einbau einer Mehrzahl plattenförmiger Module (M1, M2) in ein Schrägdach, umfassend:
- wenigstens einen Halter (10; 10') mit:
- einem ersten Aufnahmeabschnitt (12) zur Aufnahme eines Abschnitts eines traufenseitigen Randes eines ersten Moduls (M1) und
- einem zweiten Aufnahmeabschnitt (14; 14') zur Aufnahme eines Abschnitts eines firstseitigen Randes eines zweiten Moduls (M2) und
- ein Dichtlippenprofil (20) mit:
- einem Kopplungsabschnitt (22) zur Kopplung des Dichtlippenprofils (20) mit dem firstseitigen Rand des zweiten Moduls (M2),
- einer Dichtlippe (24), deren Hauptlängserstreckungsrichtung - im bestimmungsgemäß montierten Zustand des Systems - im Wesentlichen horizontal verläuft, wobei ein unteres Ende der Dichtlippe (24) mit dem Kopplungsabschnitt (22) verbunden ist und ein freies oberes Ende (25) der Unterseite des ersten Moduls (M1) zugewandt ist, und
- einer zumindest abschnittsweise von der Dichtlippe (24) begrenzten Rinne (26) zum Sammeln und Ableiten von Kondenswasser (KW), das sich - im bestimmungsgemäß montierten Zustand des Systems - an der Unterseite des ersten Moduls (M1) gebildet hat,
**dadurch gekennzeichnet, dass** die Dichtlippe (24) wenigstens eine Aussparung (24') aufweist, welche derart angeordnet ist, dass in der Rinne (26) gesammeltes Kondenswasser (KW) - im bestimmungsgemäß montierten Zustand des Systems - auf die Oberseite des zweiten Moduls (M2) abgeleitet wird.

2. System nach Anspruch 1, **dadurch gekennzeichnet, dass** die Dichtlippe (24) wenigstens zwei Aussparungen (24') umfasst, wobei vorzugsweise jeweils eine Aussparung (24') an den beiden Längsenden in Hauptlängserstreckungsrichtung der Dichtlippe (24) vorgesehen ist.

3. System nach Anspruch 1 oder 2, **dadurch gekennzeichnet, dass** die wenigstens eine Aussparung (24') eine Abmessung in Hauptlängserstreckungsrichtung der Dichtlippe (24) von 5 mm bis 20 mm, bevorzugt von 10 mm bis 15 mm, aufweist.

4. System nach einem der vorhergehenden Ansprüche, **dadurch gekennzeichnet, dass** das Dichtlippenprofil (20), insbesondere die Dichtlippe (24), einen elastischen Kunststoff, wie zum Beispiel Ethylen-Propylen-Dien-Kautschuk, umfasst, und vorzugsweise überwiegend aus diesem gebildet ist.

5. System nach Anspruch 4, **dadurch gekennzeichnet, dass** das Dichtlippenprofil (20) ferner ein Verstärkungselement (23) umfasst, welches vorzugsweise im Wesentlichen vollständig von dem elastischen Kunststoff umgeben ist und eine höhere Festigkeit als dieses aufweist.

6. System nach Anspruch 5, **dadurch gekennzeichnet, dass** das Verstärkungselement (23) so ausgebildet ist, dass es zur Kopplung des Dichtlippenprofils (20) mit dem firstseitigen Rand des zweiten Moduls (M2) auf diesen Rand eine Klemmkraft auszuüben vermag.

7. System nach einem der vorhergehenden Ansprüche, **dadurch gekennzeichnet, dass** der Kopplungsabschnitt (22) des Dichtlippenprofils (20) ausgebildet ist, den firstseitigen Rand des zweiten Moduls (M2) von drei Seiten zu umgeben.

8. System nach einem der vorhergehenden Ansprüche, **dadurch gekennzeichnet, dass** die Rinne (26) ferner von einem an den Kopplungsabschnitt angeformten Vorsprung (28) begrenzt wird, dessen Hauptlängserstreckungsrichtung im Wesentlichen parallel zu der Hauptlängserstreckungsrichtung der Dichtlippe (24) verläuft.

9. System nach einem der vorhergehenden Ansprüche, **dadurch gekennzeichnet, dass** - im bestimmungsgemäß montierten Zustand des Systems - der erste Aufnahmeabschnitt (12) des Halters (10; 10') im Wesentlichen oberhalb des zweiten Aufnahmeabschnitts (14; 14') angeordnet ist, so dass vorzugsweise das erste Modul (M1) das zweite Modul (M2) überlappt.

10. System nach einem der vorhergehenden Ansprüche, **dadurch gekennzeichnet, dass** der wenigstens eine Halter (10; 10') in der Seitenansicht im Wesentlichen die Form eines S bzw. eines gespiegelten S aufweist, wobei die obere Öffnung der S-Form den ersten Aufnahmeabschnitt (12) bildet und die untere Öffnung der S-Form den zweiten Aufnahmeabschnitt (14; 14') bildet.

11. System nach einem der vorhergehenden Ansprüche, **dadurch gekennzeichnet, dass** der Halter (10; 10') im Wesentlichen aus einem Metall, insbesondere aus Aluminium oder Edelstahl, gebildet ist, wobei der Halter (10; 10') vorzugsweise als Stanz-Biegeteil ausgebildet ist.

12. System nach einem der vorhergehenden Ansprüche, **dadurch gekennzeichnet, dass** der zweite Aufnahmeabschnitt (14; 14') dimensioniert ist, um den firstseitigen Rand des zweiten Moduls (M2) zusammen mit dem mit diesem Rand gekoppelten Dichtlippenprofil (20) aufzunehmen.

13. System nach Anspruch 12, sofern rückbezogen nach Anspruch 10, **dadurch gekennzeichnet, dass** bezüglich der Tiefenrichtung der beiden Öffnungen die untere Öffnung der S-Form, welche den zweiten Aufnahmeabschnitt (14') bildet, größer dimensioniert ist als die obere Öffnung der S-Form, welche den ersten Aufnahmeabschnitt (12) bildet, um zu erlauben, dass der firstseitige Rand des zweiten Moduls (M2) zusammen mit dem mit diesem Rand gekoppelten Dichtlippenprofil (20) innerhalb des zweiten Aufnahmeabschnitts (14') in Tiefenrichtung um mindestens die Strecke verschoben werden kann, die der Tiefe (d) des ersten Aufnahmeabschnitts (12) entspricht.

14. System nach einem der vorhergehenden Ansprüche, **dadurch gekennzeichnet, dass** das System ferner ein Abstandselement (30; 30') umfasst, welches zwischen einer Bodenfläche des zweiten Aufnahmeabschnitts (14; 14') des Halters (10; 10') und dem Dichtlippenprofil (20) angeordnet oder anordenbar ist, wobei das Abstandselement (30; 30') vorzugsweise separat von dem Halter (10; 10') ausgebildet ist.

15. System nach Anspruch 14, **dadurch gekennzeichnet, dass** das Abstandselement (30; 30') eine Dicke (b) aufweist, die derart bemessen ist, dass - im bestimmungsgemäß montierten Zustand des Systems - das freie obere Ende der Dichtlippe (26), zumindest abschnittsweise, mit der Unterseite des ersten Moduls (M1) in Kontakt ist.

16. Montage- und Dichtsystem zum Einbau einer Mehrzahl plattenförmiger Module in ein Schrägdach, umfassend:
- wenigstens einen Halter mit:
- einem ersten Aufnahmeabschnitt zur Aufnahme eines Abschnitts eines traufenseitigen Randes eines ersten Moduls und
- einem zweiten Aufnahmeabschnitt zur Aufnahme eines Abschnitts eines firstseitigen Randes eines zweiten Moduls und
- ein Dichtlippenprofil mit:
- einem Kopplungsabschnitt zur Kopplung des Dichtlippenprofils mit dem traufenseitigen Rand des ersten Moduls und
- einer Dichtlippe, deren Hauptlängserstreckungsrichtung - im bestimmungsgemäß montierten Zustand des Systems - im Wesentlichen horizontal verläuft, wobei ein oberes Ende der Dichtlippe mit dem Kopplungsabschnitt verbunden ist und ein freies unteres Ende der Oberseite des zweiten Moduls zugewandt ist,
wobei die Dichtlippe wenigstens eine Aussparung aufweist, welche derart angeordnet ist, dass Kondenswasser, das sich - im bestimmungsgemäß montierten Zustand des Systems - an der Unterseite des ersten Moduls gebildet hat, - im bestimmungsgemäß montierten Zustand des Systems - auf die Oberseite des zweiten Moduls abgeleitet wird.
